# FASCICULE DE BREVET EUROPEEN

(11) **EP 0 634 104 B1**
(45) Date de publication et mention de la délivrance du brevet: **12.12.2001**
(21) Numéro de dépôt: 94401607.0
(22) Date de dépôt: 12.07.1994
(51) Int. Cl.: A23B 7/00, A23B 7/16

(54) **Procédé pour la décontamination microbiologique des bulbes comestibles, notamment d'ail et d'oignon**
Mikrobiologische Dekontamination von essbaren Pflanzenzwiebeln, wie Knoblauch und Zwiebeln
Microbiological decontamination of edible plantbulbs such as garlic and onions

(30) Priorité: 13.07.1993 FR 9308601
(43) Date de publication de la demande: 18.01.1995
(73) Titulaire: DUCROS, F-84200 Carpentras (FR)
(72) Inventeur: Ollivier, Gilbert, F-59210 Coudekerque-Branche (FR); Mastorino, Eric, F-13200 Arles (FR)
(74) Mandataire: Leboyer, Jean-Jacques

(56) Documents cités:
- EP-A- 0 212 583
- US-A- 2 476 774
- US-A- 2 752 250

## Description

La présente invention concerne la décontamination microbiologique des bulbes comestibles déshydratés, notamment des bulbes d'ail, d'oignon ou d'échalote. L'invention concerne plus particulièrement un procédé pour la décontamination microbiologique à la chaleur en milieu humide de bulbes comestibles déshydratés, tels que de l'ail déshydraté ou de l'oignon ou échalote déshydraté.

Les bulbes comestibles déshydratés sont des produits relativement peu contaminés, bien qu'ils émanent de plantes d'origine tellurique. Il subsiste toutefois fréquemment dans ces bulbes quelques microorganismes pathogènes et il y avait donc un besoin pour un traitement de décontamination microbiologique (couramment dénommée "débactérisation") de ces bulbes, afin d'en normaliser la qualité microbiologique.

Un traitement par la chaleur en milieu humide est quasiment impossible à réaliser de façon efficace, car la matière traitée a alors tendance à se prendre en masse, à donner lieu à un mottage post-traitement et à bloquer les pièces mobiles de l'agitateur et des conditionneuses, entre autres inconvénients.

Il est connu que les oignons et les aulx ou ails sont hygroscopiques et doivent être conservés à l'abri de l'humidité. Des procédés de traitement UHT sous vapeur saturée ont également été proposés pour la réduction du nombre des germes microbiens dans les légumes déshydratés [ZFL, Z. Lebensm.-Technol.-Verfahrenstech., vol. 39, No. 1, pages 23-28 (1988)].

Un procédé de stérilisation d'épices par vapeur pulsée a également été préconisé par Leife, A. dans Livsmedelstechnik 34(1/2), pages 24-25 (1992). Une pasteurisation à la vapeur naturelle a par ailleurs été proposée par Anon dans European Food & Drink Review, automne, 64, pages 66-67 (1991).

Un autre procédé pour la stérilisation d'épices, décrit dans le document US-A-4910027, consiste à revêtir des épices entières avec une protéine animale comestible et à chauffer ensuite l'épice revêtue dans un autoclave tournant scellé, en présence de vapeur d'eau ajoutée. Une encapsulation d'épices préalablement stérilisées par de la vapeur sous pression a également été proposée pour éviter les pertes de flaveur au cours du temps [voir Minet, F. et Sorensen, S. dans European Food & Drink Review, automne, 109, page 111 (1990)].

On connaît également un procédé de séchage de produits alimentaires, tels qu'oignons, carottes et potirons, comprenant une imprégnation sous pression d'une solution aqueuse de saccharides réalisée dans un autoclave, suivie d'une injection d'huile chaude dans l'autoclave mis sous pression réduite, pour l'élimination de l'eau contenue dans ces produits, et ensuite l'évacuation de l'huile (EP-A-0212583). Ce procédé est présenté comme une alternative à la friture sous vide ou à la lyophilisation.

Il avait certes aussi été proposé d'ajouter à de l'ail ou à des oignons déshydratés, réduits en poudre, moins de 2% en poids de stéarate de calcium, mais en tant qu'agent d'enrobage antimottant empêchant la prise en masse au stockage. L'utilisation de ce stéarate de calcium aux fins de la présente invention aurait été impossible, comme il va être montré plus loin.

Il avait également été proposé, dans le document US-A-2752250, d'améliorer l'aspect de surface des fruits séchés, par exemple prunes, figues, raisins, par un trempage dans une matière grasse, suivi par une pulvérisation d'eau chaude ou de vapeur d'eau destinée à forcer le corps gras à mieux pénétrer dans le fruit et à éliminer par lavage l'excès de corps gras, de façon à n'en laisser subsister que des traces infimes.

On a maintenant trouvé de manière inattendue que l'on peut éviter ces contraintes ou inconvénients et d'autres et obtenir une décontamination microbiologique efficace, par un procédé selon lequel on traite des bulbes comestibles déshydratés, sous forme entière ou tranchée, par enrobage avec un corps gras alimentaire approprié, avant de soumettre les dits bulbes à un traitement thermique en milieu humide, avantageusement avec de la vapeur d'eau, puis on chambre de préférence la matière ainsi enrobée et imprégnée, et si nécessaire on sèche, de préférence sous vide, pour chasser l'humidité résiduelle.

L'invention a essentiellement pour objet un procédé pour la décontamination microbiologique des bulbes comestibles déshydratés, notamment des bulbes d'ail, d'oignon ou d'échalote, comprenant le traitement des bulbes comestibles déshydratés, sous forme entière ou tranchée, par enrobage ou prémélange avec une quantité d'au moins un corps gras alimentaire approprié comprise entre 0,5 et 4% en poids, le traitement thermique subséquent des dits bulbes en milieu humide, avantageusement avec de la vapeur d'eau, puis de préférence le chambrage de la matière ainsi enrobée et imprégnée, et si nécessaire un séchage, de préférence sous vide, pour chasser l'humidité résiduelle.

Dans la présente description on entend par décontamination microbiologique une "débactérisation" au sens large, c'est-à-dire aussi bien une pasteurisation (vis-à-vis des germes pathogènes) qu'une stérilisation.

Pour la mise en oeuvre du procédé selon la présente invention les bulbes peuvent être entiers ou sous une forme tranchée ou broyée, par exemple en lamelles ou en granulés; ils ne doivent pas en revanche se présenter sous la forme de poudre ou de granulés.

Au sens où on l'entend dans le présent texte, des lamelles sont des tranches de gousses d'environ 1 mm d'épaisseur, coupées en 7-8 morceaux approximativement.

Les corps gras utiles dans le procédé selon l'invention sont en pratique tous corps gras (huiles ou graisses) de qualité alimentaire, liquides à environ 50-55°C. Ces matières grasses peuvent, soit être liquides en elles-mêmes dans l'intervalle de 20-55°C, soit être constituées de matières grasses fondues qui sont ainsi amenées à l'état liquide dans l'intervalle de 50-55°C. A titre d'exemples, ce peuvent être:
. des huiles et graisses végétales en l'état ou hydrogénées et/ou fractionnées, telles que par exemple les huiles d'amande, d'arachide, de carthame, de colza, de coprah, de karité, de germe de maïs, de noisette, de noix, d'olive, de palme, de palmiste, de pépin de raisin, de sésame, de soja, de tournesol, ou leurs mélanges;
. des matières grasses animales en l'état ou hydrogénées et/ou fractionnées, telles que par exemple la matière grasse laitière anhydre, la graisse de cheval, le saindoux, le suif de boeuf, les graisses de volailles, les huiles de poissons et de mammifères marins, ou leurs mélanges.

D'une manière plus générale, ces corps gras se définissent comme étant composés essentiellement par des triglycérides, c'est-à-dire des triesters de glycérol et d'acides gras saturés ou insaturés, de longueur de chaîne C₄ à C₂₄.

Comme indiqué plus haut, la proportion du corps gras ou mélange de corps gras à mettre en oeuvre dans le procédé selon l'invention est en pratique comprise entre 0,5 et 4% en poids/poids.

Le procédé est avantageusement accompagné de mises sous vide progressives de la matière traitée, de préférence sous la forme de:
- une mise sous un vide partiel, de préférence d'environ -300 mbar, de la matière à traiter avant l'injection du corps gras;
- l'application d'un pré-vide de -200 à -900 mbar avant traitement par la vapeur; et/ou
- l'application d'un vide plus poussé pour le séchage de la matière traitée.

Les dépressions susdites s'entendent par référence à la pression atmosphérique et sont exprimées en millibars (1 millibar = 10² pascals).

Dans la pratique on effectue l'injection de vapeur jusqu'à atteindre les températures de pasteurisation de la matière à traiter requises, comprises entre 60°C et 120°C. Il convient en fait de tenir compte pour l'arrêt de l'injection de vapeur du barème que l'on souhaite appliquer à la pasteurisation dans chaque cas particulier, qui est tributaire aussi bien de la nature que de l'état de la charge de bulbes à traiter. L'homme du métier est à même d'optimiser ce barême dans chaque cas d'espèce en trouvant, après des essais de routine selon une méthode itérative, l'équilibre qui convient le mieux entre la charge résiduelle après traitement et les propriétés organoleptiques du produit traité.

La durée de la phase de séchage ne peut être définie précisément; elle est variable en fonction de l'humidité résiduelle souhaitée. En pratique elle peut varier de préférence entre 30 et 50 minutes.

Les bulbes traités par le procédé selon l'invention absorbent beaucoup moins d'eau que ceux qui n'ont pas reçu ce traitement et les particules de matière ne se collent pas entre elles.

Le procédé peut être mis en oeuvre aussi bien en continu qu'en discontinu. Il est décrit ci-après plus en détail en référence à des appareillages de mise en oeuvre illustratifs, représentés sur les dessins ci-annexés, dans lesquels:
- Fig. 1 représente en coupe transversale schématique partielle un appareillage fonctionnant en continu avec aspersion d'huile;
- Fig. 2 représente en coupe transversale schématique partielle un appareillage avec prémélange pour fonctionnement en continu;
- Fig. 3 représente en coupe transversale schématique partielle un appareillage pour le fonctionnement en discontinu.

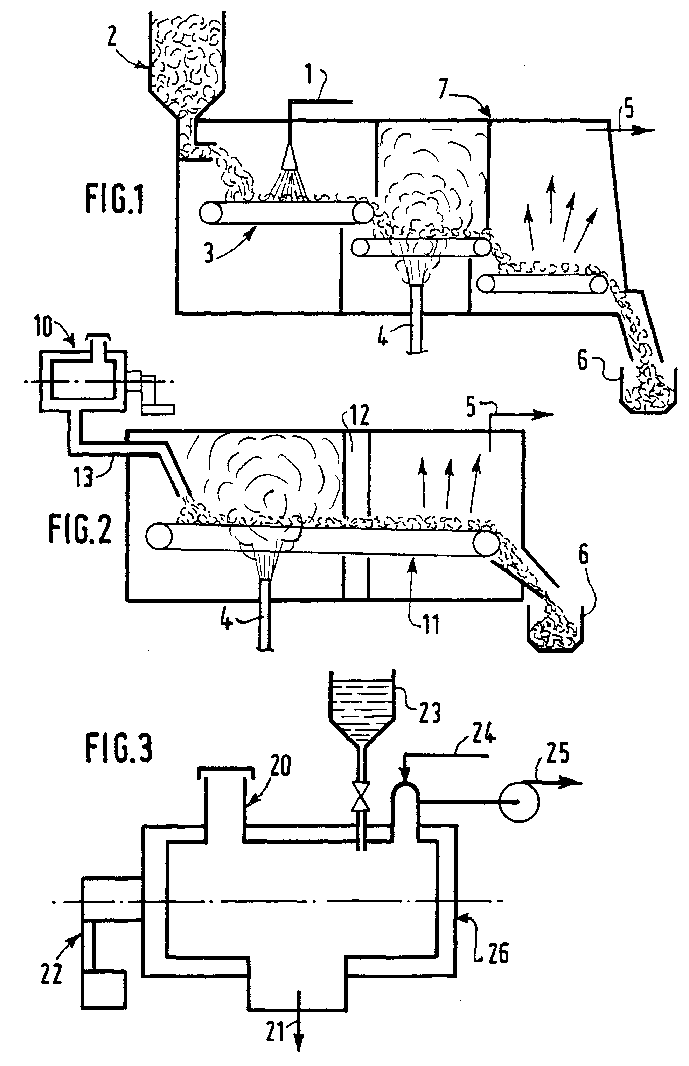

Dans sa version pour fonctionnement en continu avec aspersion d'huile (voir Fig. 1), l'appareillage comprend essentiellement une buse d'aspersion d'huile 1, un silo d'ail 2, un convoyeur-mélangeur 3, un dispositif d'injection de vapeur surchauffée 4, de préférence pour définir un courant ascendant arrivant en dessous d'une bande transporteuse alvéolée, et une enceinte pour vide de séchage 5, une sortie pour soutirage 6 et un sas 7 (situé entre deux chambres dont les pressions respectives sont différentes).

Dans la variante agencée pour un fonctionnement en continu avec prémélange (voir Fig. 2), l'appareillage commporte essentiellement une cuve de mélange ail-huile 10, un convoyeur alvéolé 11, un dispositif d'injection de vapeur surchauffée 4, un sas 12, une enceinte équipée pour réaliser un vide pour séchage 5, un dispositif d'alimentation d'ail enrobé 13 et une sortie pour soutirage de produit 6.

En ce qui concerne la forme de mise en oeuvre en discontinu (voir Fig. 3), elle peut avantageusement être constituée par un appareillage comportant essentiellement un dispositif d'alimentation en produit à traiter 20, une sortie pour soutirage 21, un agitateur à vitesse variable 22, une réserve de matière grasse 23, un dispositif d'injection de vapeur 24, un équipement de mise sous vide pour séchage 25 et une cuve agitée à double enveloppe 26, ainsi qu'au moins un capteur de température, non représenté.

L'invention est décrite plus concrètement dans les exemples illustratifs ci-dessous, dans lesquels les pourcentages ou parties sont en poids, sauf indication contraire.

### Exemple 1:

L'appareillage était tel que décrit dans la figure 3. La charge de bulbes à traiter était composée de 350 kg d'ail en lamelles. L'appareillage complet a été préchauffé à environ 105°C.

On a introduit en 20 environ 350 kg d'ail en lamelles sous agitation et on a généré dans l'enceinte 26 une dépression de -300 mbar (1 millibar = 10² pascals), par rapport à la pression atmosphérique. On a injecté sous ce vide partiel, à partir de la réserve 23, 4 l d'huile de tournesol riche en acide oléique (commercialisée sous la dénomination Oléisol® par la société Céréol) à l'aide d'une buse dispersante et on a agité le contenu de l'enceinte 26 pendant 3-4 minutes. L'ail était alors enrobé et protégé de l'eau.

Un pré-vide a été réalisé jusqu'à -700 mbar. On a alors procédé à l'injection de vapeur, qui a été stoppée quand la température à coeur du produit atteignait 85°C. On a laissé le produit à traiter reposer pendant une période de chambrage qui a permis d'atteindre par inertie une température de 90°C à coeur.

On a ensuite séché l'ail sous un vide de -950 mbar pendant 45 minutes.

Après avoir rétabli la pression atmosphérique on a soutiré l'ail dans des sacs en papier de 20 kg chacun, puis on a étalé ces sacs pour en refroidir le contenu par convection naturelle pendant quelques heures.

L'ail traité ainsi obtenu pouvait être utilisé exactement comme l'ail standard.

L'analyse de la décontamination du produit a donné les résultats suivants:

| Microorganismes | AVANT TRAITEMENT | APRES TRAITEMENT |
|---|---|---|
| Aérobies/mésophiles/g | 1,1 x 10⁵ | 7 x 10³ |
| Levures/g | < 10 | < 10 |
| Moisissures/g | 2 x 10³ | < 10 |
| Coliformes/g | 1000 | 0 |
| Coliformes fécaux/g | 10 | 0 |
| Anaérobies sulfito-réducteurs/g | 50 | < 10 |
| Staphylococcus aureus/g | < 10 | < 10 |
| Salmonella | absence/25 g | absence/25g |

### Exemple 2:

En procédant comme indiqué dans l'exemple 1, mais en arrêtant l'injection de vapeur surchauffée à 87°C, on a obtenu de même un ail traité qui pouvait être utilisé comme l'ail standard et dont l'analyse de la décontamination a donné les résultats suivants:

| Microorganismes | AVANT TRAITEMENT | APRES TRAITEMENT |
|---|---|---|
| Aérobies/mésophiles/g | 9,6 x 10⁴ | 5 x 10³ |
| Levures/g | 10² | < 10 |
| Moisissures/g | 10 | < 10 |
| Coliformes/g | 6 x 10³ | < 10 |
| Coliformes fécaux/g | 6 x 10³ | absence |
| Anaérobies sulfito-réducteurs/g | 10 | 10 |
| Staphylococcus aureus/g | < 10² | < 10² |
| Salmonella | absence/25 g | absence/25 g |

### Exemple comparatif

L'appareillage était tel que décrit dans la figure 3. La charge de bulbes à traiter était composée de 350 kg d'ail en lamelles. L'appareillage a été préchauffé par une double enveloppe à environ 105°C.

On a introduit en 1 environ 350 kg d'ail en lamelles et 1% de stéarate de calcium en poudre sous agitation; on a maintenu l'agitation pendant trois minutes et on a généré dans l'enceinte 7 un vide de -700 mbar. On a alors procédé à l'injection de vapeur, qui a été stoppée quand la température à coeur du produit atteignait 80°C.

Alors que l'on rétablissait la pression atmosphérique pour procéder à la dépressurisation du produit, l'agitateur s'est tordu, puis bloqué. On a dû stopper l'essai en raison de la prise en masse de l'ail.

## Revendications

1. Procédé pour la décontamination microbiologique des bulbes comestibles déshydratés, notamment des bulbes d'ail, d'oignon ou d'échalote, **caractérisé en ce qu'**il comprend le traitement des bulbes comestibles déshydratés, sous forme entière, tranchée ou broyée, par enrobage ou prémélange avec une quantité d'au moins un corps gras alimentaire approprié comprise entre 0,5 et 4% en poids, le traitement thermique subséquent des dits bulbes en milieu humide avec de la vapeur d'eau, puis de préférence le chambrage de la matière ainsi enrobée et imprégnée, et si nécessaire un séchage, de préférence sous vide, pour chasser l'humidité résiduelle.

2. Procédé selon la revendication 1, **caractérisé en ce que** les bulbes sont entiers ou sous une forme tranchée ou broyée, par exemple en lamelles ou en granulés.

3. Procédé selon la revendication 2, **caractérisé en ce que** les lamelles sont des tranches de gousses d'environ 1 mm d'épaisseur, coupées en 7-8 morceaux approximativement.

4. Procédé selon l'une quelconque des revendications 1 à 3, **caractérisé en ce que** le corps gras ou mélange de corps gras est de qualité alimentaire et liquide à 50-55°C.

5. Procédé selon la revendication 4, **caractérisé en ce que** le corps gras est composé essentiellement par des triglycérides, c'est-à-dire des triesters de glycérol et d'acides gras saturés ou insaturés, de longueur de chaîne C₄ à C₂₄.

6. Procédé selon la revendication 4, **caractérisé en ce que** le corps gras est choisi parmi:
. des huiles et graisses végétales en l'état ou hydrogénées et/ou fractionnées, telles que par exemple les huiles d'amande, d'arachide, de carthame, de colza, de coprah, de karité, de germe de maïs, de noisette, de noix, d'olive, de palme, de palmiste, de pépin de raisin, de sésame, de soja, de tournesol, ou leurs mélanges;
. des matières grasses animales en l'état ou hydrogénées et/ou fractionnées, telles que par exemple la matière grasse laitière anhydre, la graisse de cheval, le saindoux, le suif de boeuf, les graisses de volailles, les huiles de poissons et de mammifères marins, ou leurs mélanges.

7. Procédé selon l'une quelconque des revendications 1 à 6, **caractérisé en ce qu'**il comprend:
- une mise sous un vide partiel, de préférence d'environ -300 mbar, de la matière à traiter avant l'injection du corps gras;
- l'application d'un pré-vide de -200 à -900 mbar avant traitement par la vapeur; et/ou
- l'application d'un vide plus poussé pour le séchage de la matière traitée.

8. Procédé selon l'une quelconque des revendications 1 à 7, **caractérisé en ce qu'**on effectue l'injection de vapeur jusqu'à atteindre les températures de pasteurisation de la matière à traiter requises, comprises entre 60°C et 120°C.

9. Procédé selon l'une quelconque des revendications 1 à 7, **caractérisé en ce qu'**on met en oeuvre la phase de séchage pendant une durée variant entre 30 et 50 minutes.

## Patentansprüche

1. Verfahren zur mikrobiologischen Dekontamination von dehydrierten essbaren Wurzelknollen, insbesondere von Knoblauch-, Zwiebel- oder Schalottenknollen, **dadurch gekennzeichnet, dass** es die Behandlung von dehydrierten essbaren Knollen in ganzer, geschnittener oder zerkleinerter Form durch Umhüllung oder Vormischung mit einer Menge von wenigstens einem Lebensmittelfettkörper, in geeigneter Weise enthalten zwischen 0,5 und 4 Gew.-%, die nachfolgende Wärmebehandlung dieser Knollen in feuchter Umgebung mit Wasserdampf, dann vorzugsweise die allseitige Einschließung dieses so umhüllten und imprägnierten Materials und, gegebenenfalls, eine Trocknung, vorzugsweise unter Vakuum, um die Restfeuchtigkeit auszutreiben, umfasst.

2. Verfahren nach Anspruch 1, **dadurch gekennzeichnet, dass** die Knollen vollständig oder in einer geschnittenen oder zerkleinerten Form, zum Beispiel in Lamellen- oder in Granulatform, sind.

3. Verfahren nach Anspruch 2, **dadurch gekennzeichnet, dass** die Lamellen Schotenscheiben von ungefähr 1 mm Dicke sind, die in annähernd 7 bis 8 Stücke geteilt sind.

4. Verfahren nach einem der Ansprüche 1 bis 3, **dadurch gekennzeichnet, dass** der Fettkörper oder die Fettkörpermischung Nahrungsqualität aufweisen und bei 50 bis 55°C flüssig sind.

5. Verfahren nach Anspruch 4, **dadurch gekennzeichnet, dass** der Fettkörper im Wesentlichen durch Triglyceride, das heißt Glycerintriester und gesättigte oder ungesättigte Fettsäuren einer Kettenlänge von 4 bis 24 Kohlenstoffatomen zusammengesetzt ist.

6. Verfahren nach Anspruch 4, **dadurch gekennzeichnet, dass** der Fettkörper ausgewählt ist aus:
pflanzlichen Fetten und Ölen, wie sie sind oder in hydriertem und/oder fraktioniertem Zustand, wie zum Beispiel die Mandel-, Erdnuss-, Kartham-, Raps-, Kopra-, Karité-, Maiskeim-, Haselnuss-, (Wal-)Nuss-, Oliven-, Palm-, Palmkohl-, Traubenkern-, Sesam-, Soja-, Sonnenblumenöle oder deren Mischungen;
tierischen Fetten, wie sie sind oder in hydriertem und/oder fraktioniertem Zustand, wie zum Beispiel entwässertes Milchfett, Pferdefett, (Schweine-)Schmalz, Rindertalg, Geflügelfette, Fisch- und Wassersäugetieröle oder deren Mischungen.

7. Verfahren nach einem der Ansprüche 1 bis 6, **dadurch gekennzeichnet, dass** es umfasst:
- eine Beaufschlagung des zu behandelnden Materials mit einem Teilvakuum, vorzugsweise von ungefähr -300 mbar vor dem Einführen des Fettkörpers,
- die Anwendung eines Vorvakuums von -200 bis -900 mbar vor Behandlung durch den Dampf, und/oder
- die Anwendung eines Hochvakuums zur Trocknung des behandelten Materials.

8. Verfahren nach einem der Ansprüche 1 bis 7, **dadurch gekennzeichnet, dass** man das Einführen von Dampf bis zum Erreichen der erwünschten Pasteurisierungstemperaturen des zu behandelnden Materials, zwischen 60°C und 120°C, durchführt.

9. Verfahren nach einem der Ansprüche 1 bis 7, **dadurch gekennzeichnet, dass** man die Trocknungsphase während einer Dauer durchführt, welche zwischen 30 und 50 Minuten variiert.

## Claims

1. Method for the microbiological decontamination of dried edible bulbs, notably garlic, onion or shallot bulbs, **characterised in that** it comprises treating the dried edible bulbs, whether whole, sliced or ground, by coating or pre-mixing them with a quantity of at least one suitable nutrient fatty body comprised between 0.5 and 4 % by weight, next heat-treating said bulbs with steam in a humid medium, then preferably bringing to room temperature the material thus coated and impregnated, and if necessary drying it, preferably in a vacuum, to expel the residual moisture.

2. Method according to claim 1, **characterised in that** the bulbs are whole or in a sliced or ground form, for example slivers or granulates.

3. Method according to claim 2, **characterised in that** the slivers are slices of cloves approximately 1 mm thick, cut into approximately 7 or 8 pieces.

4. Method according to any of claims 1 to 3, **characterised in that** the fatty body or mixture of fatty bodies is of food standard and is liquid at 50 to 55 °C.

5. Method according to claim 4, **characterised in that** the fatty body is made up essentially of triglycerides, i.e. triesters of glycerol and of saturated or unsaturated fatty acids, with a C₄ to C₂₄ chain length.

6. Method according to claim 4, **characterised in that** the fatty body is chosen from the following:
- natural or hydrogenated and/or fractional vegetable oils and fats, such as for example almond oil, groundnut oil, safflower oil, rapeseed oil, coconut oil, shea oil, wheatgerm oil, hazelnut oil, walnut oil, olive oil, palm oil, cabbage palm oil, grape pip oil, sesame oil, soya oil, sunflower oil, or mixtures thereof;
- natural or hydrogenated and/or fractional animal fats, such as for example anhydrous dairy fat, horse fat, lard, beef suet, poultry fats, fish oils and sea-mammal oils, or mixtures thereof.

7. Method according to any of claims 1 to 6, **characterised in that** it comprises:
- placing the material to be treated in a partial vacuum, preferably at around -300 mbars, prior to injecting the fatty body;
- applying a pre-vacuum at -200 to -900 mbars piror to the steam treatment; and/or
- applying a more intense vacuum to dry the treated material.

8. Method according to any of claims 1 to 7, **characterised in that** the injection of steam is carried out until the required pasteurisation temperatures of the material to be treated are reached, ranging from 60°C to 120°C.

9. Method according to any of claims 1 to 7, **characterised in that** the drying phase is carried out for a duration varying between 30 and 50 minutes.
